# FASCICULE DE BREVET EUROPEEN

(11) **EP 4 439 315 B1**
(45) Date de publication et mention de la délivrance du brevet: **09.07.2025**
(21) Numéro de dépôt: 24164627.2
(22) Date de dépôt: 19.03.2024
(51) Int. Cl.: G06F 12/14, G06F 13/16, G06F 21/31, G06F 21/60, G06F 21/64, G06F 21/79, G06F 21/34, G06F 21/72, G06F 21/53, G06F 21/84

(54) **PROCEDE ET CIRCUIT D'EMULATION D'UNE MEMOIRE MORTE**
VERFAHREN UND SCHALTUNG ZUR EMULATION EINES FESTWERTSPEICHERS
METHOD AND CIRCUIT FOR EMULATING A READ ONLY MEMORY

(30) Priorité: 31.03.2023 FR 2303156
(43) Date de publication de la demande: 02.10.2024
(73) Titulaire: STMicroelectronics International N.V., 1228 Plan-les-Ouates, Geneva (CH)
(72) Inventeur: ANQUET, Nicolas, 38000 GRENOBLE (FR); PELISSIER, Gilles, 38800 CHAMPAGNIER (FR); SUSELLA, Ruggero, 20132 MILANO (IT); MONTMASSON, Julien, 13300 SALON DE PROVENCE (FR)
(74) Mandataire: Cabinet Beaumont

(56) Documents cités:
- EP-A1- 1 208 667
- EP-A1- 2 437 198
- WO-A1-2020/190776
- US-A1- 2014 229 739
- US-A1- 2019 319 781
- US-B1- 6 708 273

## Description

### Domaine technique

La présente description concerne de façon générale un procédé et un circuit permettant l'émulation d'une mémoire morte.

### Technique antérieure

Une mémoire morte, telle qu'une mémoire de type ROM (de l'anglais « Read-Only Memory »), présente l'avantage de stocker des données de façon immuable. Toutefois, une mémoire morte peut avoir certaines limitations. En particulier, il existe des mémoires mortes qui ne sont pas reprogrammables, ce qui peut être une contrainte dans certaines applications. Il existe également des mémoires mortes reprogrammables, qui ont tendance à être consommatrices en surface et energie.

Une solution est d'émuler une mémoire morte par une mémoire vive. Toutefois, il est important, à des fins de sécurité, de garantir l'intégrité des données stockées. Il est également important de s'assurer que, lors de l'écriture d'une séquence de donnée dans la mémoire, les données écrites sont correctes. Il peut être aussi souhaitable de s'assurer que ces données ont été écrites aux correctes adresses, qu'elles n'ont pas été écrites plusieurs fois et que l'ordre de la séquence est respecté. Les documents US6708273 B1 et EP1208667 A1 décrivent des systèmes de chiffrement de mémoire.

Il existe un besoin d'améliorer les procédés et circuits garantissant l'intégrité de données stockées dans une mémoire, telle qu'une mémoire vive émulant une mémoire de type ROM.

### Résumé de l'invention

La présente invention est définie par les revendications indépendantes jointes auxquelles il convient de se référer. Des caractéristiques avantageuses sont exposées dans les revendications dépendantes.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 est un schéma par blocs d'un dispositif électronique selon un mode de réalisation de la présente description ;
la figure 2 est un schéma par bloc illustrant une opération de couplage mise en œuvre par un circuit de couplage et de chainage.
la figure 3 est un schéma par bloc illustrant une opération de vérification mise en œuvre par le circuit de couplage et de chainage ; et
la figure 4 est un organigramme illustrant des étapes d'un procédé selon un mode de réalisation de la présente description.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés. En particulier, les algorithmes de génération de codes d'authentification de message (MAC - « Message Authentification Code »), faisant par exemple intervenir des opérations de hachages et/ou des fonctions cryptographiques, sont connus par la personne du métier et ne sont pas décrits en détail.

Sauf précision contraire, lorsque l'on fait référence à deux éléments connectés entre eux, cela signifie directement connectés sans éléments intermédiaires autres que des conducteurs, et lorsque l'on fait référence à deux éléments reliés (en anglais "coupled") entre eux, cela signifie que ces deux éléments peuvent être connectés ou être reliés par l'intermédiaire d'un ou plusieurs autres éléments.

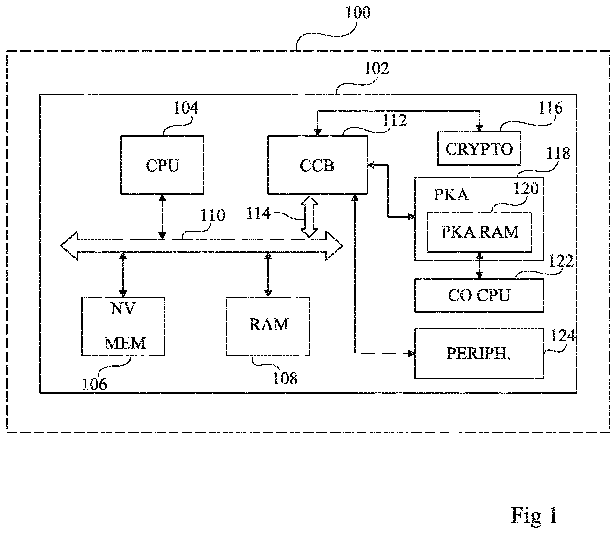

La figure 1 est un schéma par blocs d'un dispositif électronique 100 comprenant un circuit intégré 102 selon un mode de réalisation de la présente description.

Le dispositif électronique 100 est par exemple un dispositif électronique mobile, tel qu'un téléphone mobile, ou une carte électronique telle qu'une carte à microcircuits.

Le circuit 102 comprend par exemple un processeur 104 (CPU) relié à une mémoire non volatile 106 (NV MEM) et à une mémoire volatile 108 (RAM) par l'intermédiaire d'un bus système 110. A titre d'exemple, la mémoire 106 est une mémoire de type Flash et la mémoire 108 est une mémoire de type RAM (de l'anglais "Random Access Memory").

Selon un mode de réalisation, le circuit 102 comprend en outre un circuit de couplage et chainage 112 (CCB - de l'anglais « Coupling and Chaining Bridge ») relié au bus 110 par l'intermédiaire d'un bus 114. Le bus 114 est par exemple un bus de type AHB (de l'anglais » Advanced High-performance Bus »). Dans d'autres exemples, le bus 114 est un bus de type APB (de l'anglais « Advanced Peripheral Bus ») ou AXI (de l'anglais « Advanced External Interface »).

Le circuit 102 comprend en outre un circuit cryptographique 116 (CRYPTO). Le circuit cryptographique 116 est par exemple configuré pour générer des codes d'authentification de message (MAC). La génération des codes d'authentification de message comprend par exemple l'application d'une ou plusieurs opérations cryptographiques telles que par exemple des opérations de hachage et ou des opérations cryptographiques telles que des fonctions de type CMAC (de « Cipher Message Authentification Code ») et/ou GMAC (de l'anglais « Galois Message Authentification Message »). Dans un autre exemple, le circuit cryptographique 116 est configuré, en plus ou comme de manière alternative à la génération des codes d'authentification de message, pour chiffrer des données reçues, par exemple en leur appliquant un algorithme de chiffrement symétrique tel que par exemple un algorithme de type AES - GCM (Standard de Chiffrement Avancé - Mode Compteur Galois, en anglais « Galois Counter Mode ») ou de type AES - CCM (Standard de Chiffrement Avancé - Compteur avec code d'authentification de Message de Chainage de blocs Chiffrés, en anglais « Counter with Cipher block chaining Message authentication Code »). A titre d'exemple, la génération du code d'authentification de message et/ou l'application d'opérations cryptographiques repose sur l'utilisation d'une clef secrète. A titre d'exemple, la clef secrète est propre au dispositif 100. Autrement dit, la valeur de la clef secrète varie d'un dispositif 100 à l'autre. A titre d'exemple, la clef secrète est dérivée d'une valeur de PUF (de l'anglais « Physically Unclonable Function »).

Le circuit 102 comprend en outre, un autre circuit cryptographique 118 (PKA). A titre d'exemple, le circuit 118 est un accélérateur de clef publique (en anglais « Public Key Accelerator ») configuré pour exécuter des opérations cryptographiques selon un algorithme de cryptographie asymétrique sur la base d'une clef publique.

Le circuit cryptographique 118 comprend, ou est relié à, une mémoire volatile 120 (PKA RAM). A titre d'exemple, la mémoire 120 est une mémoire à accès aléatoire. La mémoire volatile 120 est par exemple reliée à un coprocesseur 122 (CO CPU) du circuit 102. Dans certains exemples, le coprocesseur 122 est le même circuit que le processeur 104. Ainsi, dans un exemple, la mémoire volatile 120 est relié au processeur 104.

A titre d'exemple, le circuit de couplage et de chainage 112 est en outre relié à d'autres circuits périphériques 124 (PERIH.). Les autres circuits périphériques 124 comprennent par exemple un ou plusieurs autres circuits cryptographiques, un circuit de contrôle de redondance cyclique, etc.

Selon un mode de réalisation, le circuit de couplage et de chainage 112 est configuré pour effectuer des opérations de couplage et de chainage entre les circuits cryptographiques 116 et 118, et plus particulièrement, entre le circuit cryptographique 116 et la mémoire volatile 120.

Selon un mode de réalisation, suite aux opérations de couplage et chainage réalisées entre le circuit cryptographique 116 et la mémoire volatile 120, la mémoire volatile 120 est configurée pour émuler une mémoire morte, c'est-à-dire une mémoire accessible pour lecture uniquement, dont le contenu est garanti comme étant intègre.

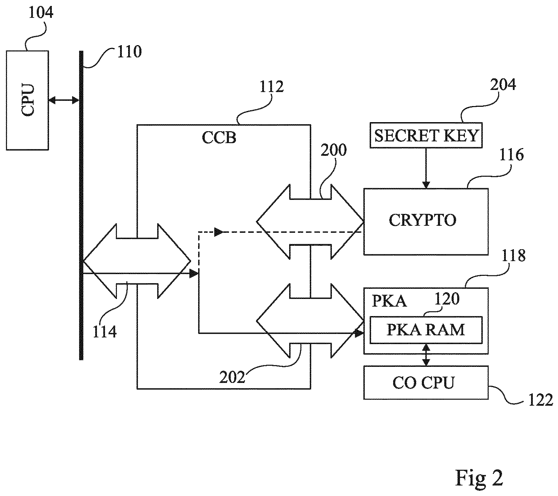

La figure 2 est un schéma par bloc illustrant un exemple d'une opération de couplage mise en œuvre par le circuit de couplage et de chainage 112.

Selon un mode de réalisation, le processeur 104 est configuré pour transmettre, au circuit de couplage et de chainage 112, une demande d'accès pour écriture dans la mémoire volatile 120 d'une séquence d'une ou plusieurs données. Les données sont, par exemple, chacune associée à une adresse de stockage dans la mémoire volatile 120.

Selon un mode de réalisation, le circuit de couplage et de chainage 112 est configuré pour effectuer une opération de couplage en interceptant les demandes d'accès pour écriture de chaque donnée de la séquence dans la mémoire volatile 120, en provenance du processeur 104 et transmise par l'intermédiaire du bus 114. L'opération de couplage comprend en outre la génération, suite à chaque demande d'écriture d'une donnée reçue, de deux nouvelles demandes d'accès pour écriture. Les deux nouvelles demandes d'accès sont transmises, par le circuit de couplage et de chainage 112 et par l'intermédiaire d'un bus 200, vers le circuit cryptographique 116. A titre d'exemple, les deux demandes d'accès pour écriture comprennent une demande d'accès pour écriture de la donnée et une autre demande d'accès pour écriture de l'adresse de stockage dans la mémoire volatile 120. L'opération de couplage comprend en outre l'écriture de la séquence de données dans le circuit 118, ou plus particulièrement dans la mémoire 120. A titre d'exemple, la séquence de données est transmise vers la mémoire volatile 120 par l'intermédiaire d'un bus 202.

Le circuit 116 est par exemple configuré pour, suite à chaque donnée et adresse reçues, effectuer une ou plusieurs opérations cryptographiques sur la base d'une clef secrète 204 (SECRET KEY). A titre d'exemple, la valeur de la clef secrète dépend du dispositif 100 et varie d'un dispositif à l'autre. A titre d'exemple la clef secrète 204 est une clef dérivée d'une clef matérielle HUK (de l'anglais « Hardware Unique Key »). Dans un autre exemple, la clef secrète est une clef matérielle par exemple issue d'une valeur de PUF. La clef secrète est par exemple regénérée par un circuit de génération PUF (non illustré) chaque fois une opération utilisant cette clef est à faire par le circuit 116. Dans un autre exemple, la clef secrète est une valeur prédéfinie en amont, par exemple lors de la fabrication du dispositif 100. La valeur de la clef secrète est par exemple en outre chiffrée, par exemple à l'aide d'une clef matérielle, telle qu'une clef matérielle unique dérivée, ou DHUK (de l'anglais « Derived Hardware Unique Key »). A titre d'exemple la valeur de la clef DHUK dépend du contexte d'utilisation du circuit 102. Pour chaque donnée et adresse de stockage reçues, le résultat de la ou des opérations cryptographiques est, par exemple, stocké dans un registre interne du circuit cryptographique 116. A titre d'exemple, le résultat est actualisé, à la volée, suite à chaque nouvelles donnée et adresse reçues, et ce résultat constitue par exemple une valeur de vérification.

A titre d'exemple, la valeur de vérification est en outre comprise dans un objet binaire de type BLOB (de l'anglais « Binary Large Object »). La valeur de vérification est par exemple une concaténation de chacun des résultats des opérations cryptographiques réalisées sur les données et les adresses. Ainsi, la valeur de vérification contient une indication sur l'ordre dans lequel les données de la séquence ont été reçues. Dans un autre exemple, la valeur de la clef secrète est choisie, par exemple par un utilisateur du dispositif 100, au moment de la création de l'objet binaire. A titre d'exemple, l'objet binaire est constitué de la séquence de données à écrire dans la mémoire 120, d'une clef privée chiffrée à l'aide d'une clef secrète et de la valeur de vérification. La valeur de vérification est par exemple calculée à partir de la séquence de données et de la clef secrète. La valeur de vérification est donc unique pour chaque séquence de données, clef secrète et configuration de la mémoire 120. La valeur de vérification dépend donc de la valeur de la clef secrète. La valeur de vérification ne sera donc pas la même pour deux clefs secrètes différentes.

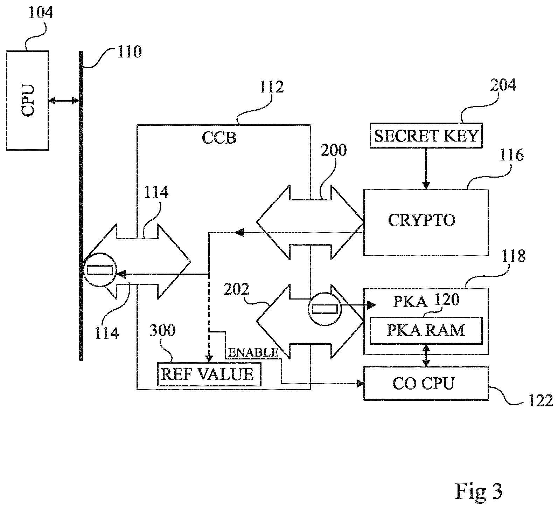

La figure 3 est un schéma par bloc illustrant une opération de vérification mise en œuvre par le circuit de couplage et de chainage 112.

Selon un mode de réalisation, le processeur 104 est configuré pour transmettre, en amont de la demande d'accès pour écriture dans la mémoire volatile 120, une valeur de référence (REF VALUE) au circuit de couplage et de chainage 112. La valeur de référence est par exemple calculée au moment de la génération de l'objet binaire. La valeur de référence est par exemple calculée de manière similaire à la valeur de vérification. A titre d'exemple, suite à sa génération, la valeur de référence est stockée dans un registre du circuit 116. Ainsi, la valeur de vérification et la valeur de référence sont égales lorsque la séquence de données n'est ni corrompue, ni modifiée, et que l'écriture de chaque donnée est réalisée à la bonne adresse. A titre d'exemple, la valeur de référence est alors stockée dans un registre interne 300 du circuit de couplage et de chainage 112. L'utilisation de la clef secrète dans le calcul de la valeur de référence rend celle-ci propre au dispositif 100. Par conséquent, chaque valeur de référence calculé par un dispositif similaire au dispositif 100 n'est pas utilisable par un autre dispositif.

La valeur de la secrète étant inconnue par le processeur 104, la valeur de référence est calculée dans des conditions contrôlées et sécurisées Ces conditions sont par exemple remplies lorsque les valeurs de données écrites dans la mémoire 120 par le processeur 104 sont connues comme étant authentiques.

Selon un mode de réalisation, le circuit de couplage et de chainage 112 est configuré pour réaliser une opération de vérification entre les circuits 116 et 118, et plus particulièrement entre le circuit cryptographique 118 et la mémoire volatile 120. L'opération de vérification est, par exemple, effectuée suite à la réception d'une demande d'accès pour lecture, en provenance du processeur 104, de la valeur de vérification stockée dans le circuit cryptographique 116.

A titre d'exemple, en réponse à la demande d'accès pour lecture de la valeur de vérification, le circuit de couplage et de chainage 112 est configuré pour transmettre une valeur par défaut, par exemple une valeur nulle, telle qu'une suite de zéros, au processeur 104.

Lors de la réalisation de l'opération de vérification, le circuit de couplage et de chainage 112 est par exemple configuré pour accéder à la valeur de vérification stockée dans le circuit cryptographique 116 et pour la comparer avec la valeur de référence stockée dans le registre 300.

Selon un mode de réalisation, lorsque la valeur de référence est différente de la valeur de vérification, le circuit de couplage et de chainage 112 est configuré pour commander la suppression du contenu de la mémoire volatile 120.

Selon un mode de réalisation, lorsque la valeur de vérification correspond à la valeur de référence, le circuit de couplage et de chainage 112 est configuré pour autoriser l'accès en lecture uniquement de la mémoire volatile 120. Par conséquent, le circuit de couplage et de chainage 112 est en outre configuré pour interdire toute demande d'accès pour écriture, par exemple venant du processeur 104, dans la mémoire volatile 120. A titre d'exemple, le circuit de couplage et de chainage 112 est configuré pour transmettre un signal d'activation ENABLE vers le coprocesseur 122 lui permettant l'accès pour lecture à la mémoire volatile 120. A titre d'exemple, le processeur 104 et le coprocesseur 122 n'ont pas accès à la mémoire 120 tant que les valeurs de vérification et de référence n'ont pas été comparées, ou ne correspondent pas. Le circuit de chainage et de couplage 112 est par exemple configuré pour autoriser l'accès pour lecture seulement au coprocesseur 122 et vers la mémoire 120 uniquement lorsque la comparaison entre les valeurs de vérification et de référence a été effectuée et que les deux valeurs correspondent. Dans un autre exemple, le circuit de couplage et de chainage 112 est configuré pour autoriser l'accès pour lecture au coprocesseur 122 et au processeur 104 vers la mémoire 120 uniquement lorsque la comparaison entre les valeurs de vérification et de référence a été effectuée et que les deux valeurs correspondent. Dans un autre exemple, le circuit 122 est configuré pour empêcher, au processeur 104 et/ou au coprocesseur 122, l'accès en lecture à la mémoire 120 lorsque les opérations d'écriture dans la mémoire 120 ne sont pas terminées.

A titre d'exemple, le circuit cryptographique 118 a accès, lorsqu'il a été déterminé que la valeur de référence correspond à la valeur de vérification, aux données stockées dans la mémoire 120. Le circuit cryptographique 118 a par exemple la possibilité d'effectuer une ou plusieurs opérations cryptographiques, par exemple des opérations de cryptographie asymétrique, sur une ou plusieurs données de la mémoire volatile 120. Dans un autre exemple, le circuit 122 est configuré pour empêcher, au processeur 104 et/ou au coprocesseur 122, l'accès en lecture à la mémoire 120 lorsque les opérations d'écriture dans la mémoire 120 ne sont pas terminées.

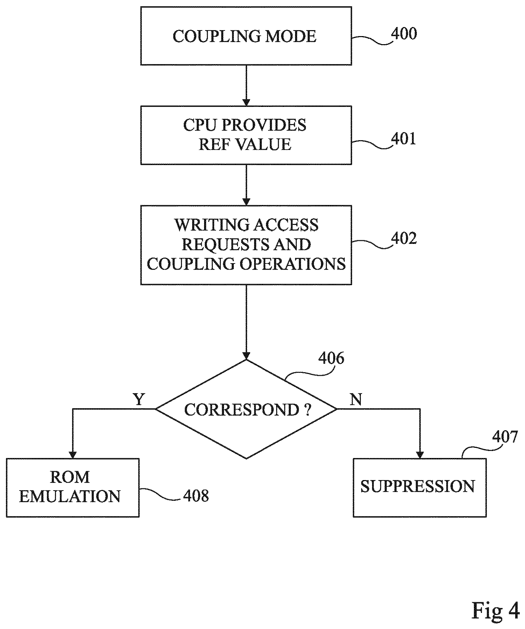

La figure 4 est un organigramme illustrant des étapes d'un procédé selon un mode de réalisation de la présente description.

Dans une étape 400 (COUPLING MODE), le processeur 104 est par exemple configuré pour accéder à un registre de contrôle (non illustré) du circuit de couplage et de chainage 112 afin de programmer le circuit 112 en stockant dans ce registre une configuration correspondante à un mode d'émulation de mémoire morte. Par exemple, cette configuration définie les actions à réaliser par le circuit 112 en réponse à une opération en écriture et en lecture par le processeur. Dans d'autres modes de réalisation, le circuit 112 est configuré pour toujours réaliser les mêmes opérations, et n'a pas besoin d'être programmé. Dans cet exemple, le circuit de couplage et de chainage reste toutefois activé. A titre d'exemple, le circuit de couplage et de chainage est activé, respectivement désactivé lorsqu'une valeur spécifique, par exemple la valeur CCB_ON, respectivement CCB_OFF, est stockée dans le registre de contrôle. Dans un autre exemple, dans la configuration ne correspondant pas au mode d'émulation de mémoire morte, le circuit de couplage et de chainage 112 se comporte comme un routeur et est configuré pour transférer les opérations demandées par le processeur 104 vers les périphériques demandés, sans changer la nature des opérations demandées. En particulier, dans la configuration ne correspondant pas au mode d'émulation de mémoire morte, le circuit de couplage et de chainage 112 est configuré pour créer de nouvelles transactions, par exemple par l'intermédaire d'opérations de chainage et de couplage, sur la base d'une demande d'accès, venant du processeur 104 et vers un des circuits périphériques.

Dans une étape 401 (CPU PROVIDES REF VALUE), le processeur 104 transmet, par exemple par l'intermédiaire des bus 110 et 114, une valeur de référence, par exemple calculée en amont par le circuit cryptographique 116. La valeur de référence est par exemple calculée sur la base d'une séquence de données, par exemple stockées dans la mémoire volatile 108. Le calcul de la valeur de référence est par exemple en outre effectué sur la base d'une ou plusieurs adresses de stockage dans la mémoire volatile 120.

Dans une étape 402 (WRITING ACCESS REQUESTS AND COUPLING OPERATIONS), le processeur 104 transmet une demande d'accès d'écriture d'une séquence d'une ou plusieurs données, chaque donnée étant associée à une adresse de stockage dans la mémoire volatile 120. En réponse à la demande d'accès pour écriture, le circuit de couplage et de chainage 112 est configuré pour effectuer une opération de couplage, comme décrit en relation avec la figure 2 entre le circuit cryptographique 116 et la mémoire volatile 120. Lors de la réalisation de l'étape 402, le processeur 104 effectue par exemple plusieurs écritures dans la mémoire volatile 120

Suite à chaque écriture d'une donnée, en association avec son adresse de stockage dans la mémoire 120, dans le circuit cryptographique 116, une valeur de vérification est par exemple générée, ou actualisée. La génération, ou l'actualisation, de la valeur de vérification est par exemple calculée par le circuit cryptographique 116, par application d'une ou plusieurs opérations cryptographiques sur la donnée et l'adresse de stockage. A titre d'exemple, la ou les opérations cryptographiques sont le calcul d'un code d'authentification de message de la donnée et de l'adresse de stockage. A titre d'exemple, suite à chaque donnée et chaque adresse de stockage, le code d'authentification de message généré est concaténé à la valeur de vérification, la valeur de vérification étant par exemple initialement une chaine vide.

Le processeur 104 est en outre configuré pour, lorsque l'écriture de la séquence de donnée dans la mémoire volatile 120 est terminée, transmettre, dans une étape 406 (CORRESPOND ?), une demande d'accès pour lecture de la valeur de vérification au circuit de couplage et de chainage 112.

En réponse à la demande de lecture effectué le circuit de couplage et de chainage 112 est configuré pour effectuer une opération de vérification comprenant la lecture de la valeur de vérification dans le circuit 116 et sa comparaison avec la valeur de référence stockée dans le registre 300, comme décrit en relation avec la figure 3. En particulier, le circuit de couplage et de chainage 112 détermine si la valeur de vérification est égale à la valeur de référence, par exemple stockée dans le registre 300.

Dans le cas où les deux valeurs ne correspondent pas, (branche N en sortie du bloc 406), cela signifie que la séquence de données n'a pas été correctement écrite dans la mémoire volatile 120. A titre d'exemple, la valeur d'une ou plusieurs données écrites sont incorrectes et/ou ont été écrites à des adresses incorrectes et/ou ont été écrites plusieurs fois et/ou la séquence de données n'a pas été écrite dans le bon ordre. Dans ce cas, le procédé se termine dans une étape 407 (SUPPRESSION) dans laquelle le circuit de couplage et de chainage 112 commande la suppression du contenu de la mémoire volatile 120. En d'autres termes, lorsque la séquence de données transmise pour écriture lors de l'étape 401 n'est pas exactement identique à la séquence de données utilisée pour le calcul de la valeur de référence, le contenu de la mémoire 120 est supprimé.

Dans le cas où, lors de l'étape 406, il est déterminé que la valeur de vérification correspond à la valeur de référence (branche Y en sortie du bloc 406), cela signifie que la séquence de données a été correctement écrite dans la mémoire volatile 120. En effet, la valeur de vérification correspond à la valeur de référence lorsque les données écrites dans le circuit 116 corresponde aux données de la séquence transmise par le processeur 104, que chaque donnée est accompagnée de la bonne adresse de stockage dans la mémoire 120 et que les données sont écrites, dans le circuit 116, dans l'ordre dans lequel le processeur commande l'écriture de la séquence dans la mémoire volatile 120.

Dans ce cas, le procédé se termine dans une étape 408 (ROM EMULATION), dans laquelle la mémoire volatile 120 devient accessible, par exemple par le coprocesseur 122, uniquement pour lecture. Le circuit de couplage et de chainage 112, ou le circuit 122 suite à la réception d'une demande d'accès en provenance du circuit de couplage et de chainage 112, est par exemple configuré pour interdire l'accès pour écriture dans la mémoire volatile 120.

Un avantage des modes de réalisation décrits est qu'ils permettent l'émulation d'une mémoire accessible uniquement pour lecture tout en améliorant les performances du circuit en termes de consommation d'énergie. En effet, une unique opération en écriture et/ou en lecture par le processeur 104 sur le bus 110 permet de réaliser l'ensemble d'opération associées à cette émulation. De même, les modes de réalisations décrits permettent l'émulation d'une ROM tout en améliorant les coûts en implémentation et en certification du circuit.

Un autre avantage des modes de réalisations décrit est qu'ils garantissent l'intégrité du contenu d'une mémoire de type ROM.

Un autre avantage des modes de réalisation décrits est qu'ils protègent le dispositif contre des attaques matérielles, par exemple visant le processeur 104.

Divers modes de réalisation et variantes ont été décrits. La personne du métier comprendra que certaines caractéristiques de ces divers modes de réalisation et pourraient être combinées.

Enfin, la mise en œuvre pratique des modes de réalisation et variantes décrits est à la portée de la personne du métier à partir des indications fonctionnelles données ci-dessus. En particulier, pour ce qui est de la méthode de calcul des valeurs de vérification et de référence, d'autres algorithmes cryptographiques peuvent être utilisés. De même, le type d'algorithme cryptographique mis en œuvre par le circuit cryptographique 116 peut varier.

## Revendications

1. Circuit de couplage et de chainage (112) configuré pour :
- effectuer une opération de couplage entre une mémoire volatile (120) reliée au circuit de couplage et de chainage par l'intermédiaire d'un premier bus (200) et un circuit cryptographique (116), relié au circuit de couplage et de chainage par l'intermédiaire d'un deuxième bus (202), en réponse à une demande d'accès en écriture d'une ou plusieurs données vers la mémoire volatile, la demande d'accès en écriture étant en provenance d'un processeur (104) relié au circuit de couplage et de chainage par l'intermédiaire d'un bus système (110) et d'un troisième bus (114), la demande d'accès comprenant en outre une adresse de stockage dans la mémoire volatile, l'opération de couplage comprenant :
l'écriture de la ou des données dans la mémoire volatile ;
le circuit de couplage et de chainage est **caractérisé en ce que** l'opération de couplage comprend en outre :
pour chacune de l'une ou plusieurs données, la génération d'une première demande d'accès pour écriture, dans le circuit cryptographique, de la donnée et la génération d'une deuxième demande d'accès pour écriture, dans le circuit cryptographique, de l'adresse de stockage ;
- effectuer une opération de vérification entre le circuit cryptographique et la mémoire volatile, en réponse à une demande d'accès pour lecture, en provenance du processeur, d'une valeur de vérification stockée dans le circuit cryptographique, l'opération de vérification comprenant :
la comparaison de la valeur de vérification avec une valeur de référence, stockée dans un registre interne (300) du circuit de couplage et de chainage ; et
- sur la base de la comparaison, l'autorisation d'accès à la mémoire volatile uniquement en lecture.

2. Circuit de couplage et de chainage (112) selon la revendication 1, configuré en outre pour, en réponse à la demande d'accès pour lecture de la valeur de vérification, en provenance du processeur (104), retourner une valeur par défaut au processeur.

3. Circuit de couplage et de chainage (112) selon la revendication 1 ou 2, configuré en outre pour, si lors de la comparaison il est déterminé que la valeur de vérification ne correspond pas à la valeur de référence, supprimer le contenu de la mémoire volatile (120).

4. Circuit de couplage et de chainage selon l'une quelconque des revendications 1 à 3, comprenant un deuxième registre programmable par le processeur permettant la configuration du circuit de couplage et de chainage (112).

5. Dispositif électronique (100) comprenant :
- le circuit de couplage et de chainage (112) selon l'une quelconque des revendications 1 à 5 ;
- le circuit cryptographique (116) relié au circuit de couplage et de chainage par l'intermédiaire du premier bus (200) ;
- la mémoire volatile (120) reliée au circuit de couplage et de chainage par l'intermédiaire du deuxième bus (202) ; et
- le processeur (104) relié au circuit de couplage et de chainage par l'intermédiaire du bus système (110) et du troisième bus (114).

6. Dispositif électronique (100) selon la revendication 5, dans lequel le circuit de cryptographique (116) est configuré pour générer la valeur de vérification en effectuant une ou plusieurs opérations cryptographiques sur chacune des valeurs de données et d'adresses de stockage et sur la base d'une clef secrète, la clef secrète étant uniquement accessible en lecture par le circuit cryptographique.

7. Dispositif électronique (100) selon la revendication 5 ou 6, comprenant en outre un deuxième circuit cryptographique (118) relié au circuit de couplage et de chainage (112) et comprenant la mémoire volatile (120).

8. Procédé comprenant :
- l'exécution d'une opération de couplage, par un circuit de couplage et de chainage (112) d'un dispositif électronique (100), sur la base d'une réception, par le circuit de couplage et de chainage, d'une demande d'accès pour écriture, en provenance d'un processeur (104) du dispositif relié au circuit de couplage et de chainage par l'intermédiaire d'un bus système (110) et d'un troisième bus (114), d'une ou plusieurs données dans une mémoire volatile (120) du dispositif reliées au circuit de couplage et de chainage par l'intermédiaire d'un premier bus (200), chaque donnée étant associée à une adresse de stockage dans la mémoire volatile, l'opération de couplage comprenant :
l'interception, par le circuit de couplage et de chainage, de la demande d'accès pour écriture ;
pour chacune de l'une ou plusieurs données, la génération d'une première demande d'accès pour écriture de la donnée et d'une deuxième demande d'accès pour écriture de l'adresse de stockage associée dans un premier circuit cryptographique (116) relié au circuit de couplage et de chainage par l'intermédiaire d'un deuxième bus (202); et
pour chacune de l'une ou plusieurs données, son écriture dans la mémoire volatile ;
- l'exécution d'une opération de vérification, par le circuit de couplage et de chainage, sur la base d'une réception, par le circuit de couplage et de chainage, d'une demande d'accès, en provenance du processeur, pour lecture d'une valeur de vérification stockée dans le premier circuit cryptographique, l'opération de vérification comprenant :
la lecture, par le circuit de couplage et de chainage, de la valeur de vérification et la comparaison avec une valeur de référence stockée dans un registre interne (300) du circuit de couplage et de chainage ; et
- l'autorisation d'accès, uniquement pour lecture, au contenu de la mémoire volatile, sur la base de la comparaison.

9. Procédé électronique (100) selon la revendication 8, dans lequel le circuit de couplage et de chainage (112) est configuré pour retourner une valeur par défaut, par exemple une suite de zéros, au processeur (104) en réponse à la demande d'accès pour lecture de la valeur de vérification.

10. Procédé selon la revendication 8 ou 9, dans lequel le premier circuit cryptographique (116) est configuré pour générer la valeur de vérification en appliquant, à chaque donnée et à chaque adresse de stockage reçue, une ou plusieurs opérations cryptographiques, la ou les opérations cryptographiques s'effectuant en outre sur la base d'une clef secrète.

11. Procédé selon la revendication 10, dans lequel la ou les opérations cryptographiques sont des opérations de hachage ou et/ou des opérations d'un algorithme cryptographique de type AES - GCM (Standard de Chiffrement Avancé - Mode Compteur Galois) ou de type AES - CCM (Standard de Chiffrement Avancé - Compteur avec code d'authentification de Message de Chainage de blocs Chiffrés) comprenant la génération de ladite valeur de vérification.

12. Procédé selon l'une quelconque des revendications 8 à 11, dans lequel le processeur (104) est configuré pour transmettre la valeur de référence au circuit de couplage et de chainage (112) avant de transmettre la demande d'accès pour écriture.

13. Procédé selon l'une quelconque des revendications 8 à 12, comprenant en outre, la suppression du contenu de la mémoire volatile (120), commandée par le circuit de couplage et de chainage (112), lorsque, lors de la comparaison, il est déterminé que la valeur de vérification ne correspond pas à la valeur de référence.

14. Procédé selon l'une quelconque des revendications 8 à 13, comprenant en outre, avant l'opération de couplage, l'écriture, par le processeur (104) et dans un registre (300) du circuit de couplage et de chainage (112), de la valeur de référence.

## Patentansprüche

1. Eine Kopplungs- und Verkettungsbrücke (112), konfiguriert zum:
- Betreiben einer Kopplung zwischen einem Zufallszugriffsspeicher (120), der über einen ersten Bus (100) mit der Kopplungs- und Verkettungsbrücke gekoppelt ist, und einer kryptographischen Schaltung (116), die über einen zweiten Bus (202) mit der Kopplungs- und Verkettungsbrücke gekoppelt ist, und zwar ansprechend auf eine Schreibzugriffsanforderung für Daten in den Zufallszugriffsspeicher, wobei die Schreibzugriffsanforderung von einem Prozessor (104) kommt, der über einen Systembus (110) und einen dritten Bus (114) mit der Kopplungs- und Verkettungsbrücke gekoppelt ist, wobei die Zugriffsanforderung ferner eine Adresse zum Speichern in den Zufallszugriffsspeicher aufweist, wobei der Kopplungsbetrieb Folgendes aufweist:
Schreiben der Daten in den Zufallszugriffsspeicher;
wobei die Kopplungs- und Verkettungsschaltung **dadurch gekennzeichnet ist, dass** der Kopplungsbetrieb ferner Folgendes aufweist:
für jeden Teil der Daten, Erzeugen einer ersten Schreibzugriffsanforderung in die kryptographische Schaltung für den Teil der Daten, und Erzeugen einer zweiten Schreibzugriffsanforderung in die kryptographische Schaltung für die Speicheradresse;
- Durchführen eines Überprüfens, zwischen der kryptographischen Schaltung und dem Zufallszugriffsspeicher ansprechend auf eine Lesezugriffsanforderung von dem Prozessor, eines Verifikationswertes, der in der kryptographischen Schaltung gespeichert ist, wobei der Überprüfungsvorgang Folgendes aufweist:
den Vergleich des Verifikationswertes mit einem Referenzwert, der in einem internen Register (300) der Kopplungs- und Verkettungsbrücke gespeichert ist; und
- basierend auf dem Vergleich, Erteilen des Zugriffs auf den Zufallszugriffsspeicher im Nur-Lese-Modus.

2. Kopplungs- und Verkettungsbrücke (112) nach Anspruch 1, ferner konfiguriert zum Zurückgeben eines Standardwerts ansprechend auf die Lesezugriffsanforderung des Verifizierungswerts von dem Prozessor (104).

3. Kopplungs- und Verkettungsbrücke (112) nach Anspruch 1 oder 2, ferner konfiguriert zum Löschen des Inhalts des Zufallszugriffsspeichers (120), wenn der Vergleich ergibt, dass der Verifikationswert nicht mit dem Referenzwert übereinstimmt.

4. Kopplungs- und Verkettungsbrücke nach einem der Ansprüche 1 bis 3, aufweisend ein zweites Register, das durch den Prozessor programmierbar ist und das es ermöglicht, die Kopplungs- und Verkettungsbrücke (112) zu konfigurieren.

5. Eine elektronische Vorrichtung (100), die Folgendes aufweist:
- die Kopplungs- und Verkettungsbrücke (112) nach einem der Ansprüche 1 bis 5;
- die kryptographische Schaltung (116), die über den ersten Bus (200) mit der Kopplungs- und Verkettungsbrücke verbunden ist;
- dem Zufallszugriffsspeicher (120), der über den zweiten Bus (202) mit der Kopplungs- und Verkettungsbrücke verbunden ist; und
- den Prozessor (104), der über den Systembus (110) und den dritten Bus (114) mit der Kopplungs- und Verkettungsbrücke verbunden ist.

6. Elektronische Vorrichtung (100) nach Anspruch 5, wobei die kryptographische Schaltung (116) konfiguriert ist zum Generieren des Verifizierungswerts dank wenigstens einer kryptographischen Operation an jedem Datenwert und jeder Speicheradresse und basierend auf einem geheimen Schlüssel, wobei der geheime Schlüssel nur im Nur-Lese-Modus auf der kryptographischen Schaltung zugänglich ist.

7. Elektronische Vorrichtung (100) nach Anspruch 5 oder 6, ferner aufweisend eine zweite kryptographische Schaltung (118), die mit der Kopplungs- und Verkettungsbrücke (112) verbunden ist und den Zufallszugriffsspeicher (120) aufweist.

8. Ein Verfahren, das Folgendes aufweist:
- Betreiben einer Kopplung durch eine Kopplungs- und Verkettungsbrücke (112) einer elektronischen Vorrichtung (100) basierend auf dem Empfang, durch die Kopplungs- und Verkettungsbrücke, einer Schreibzugriffsanforderung von einem Prozessor (104) der Vorrichtung, der mit der Kopplungs- und Verkettungsbrücke über einen Systembus (110) und einen dritten Bus (114) gekoppelt ist, für Daten in einen Zufallszugriffsspeicher (120) der Vorrichtung, der mit der Kopplungs- und Verkettungsbrücke über einen ersten Bus (200) gekoppelt ist, wobei jeder Teil der Daten mit einer Speicheradresse in dem Zufallszugriffsspeicher verknüpft ist, wobei der Kopplungsbetrieb Folgendes aufweist:
das Abfangen der Schreibzugriffsanforderung durch die Kopplungs- und Verkettungsbrücke;
für jeden Teil der Daten, Generieren einer ersten Schreibzugriffsanforderung des Teils der Daten und einer zweiten Schreibzugriffsanforderung der verknüpften Speicheradresse in eine erste kryptographische Schaltung (116), die mit der Kopplungs- und Verkettungsschaltung über einen zweiten Bus (202) gekoppelt ist; und
für jeden Teil der Daten, sein Schreiben in den Zufallszugriffsspeicher;
- Durchführen eines Überprüfens, durch die Kopplungs- und Verkettungsbrücke, basierend auf dem Empfang, durch die Kopplungs- und Verkettungsbrücke, einer Lesezugriffsanforderung durch den Prozessor, eines Verifikationswertes, der in der ersten kryptographischen Schaltung gespeichert ist, wobei der Überprüfungsvorgang Folgendes aufweist:
das Lesen, durch die Kopplungs- und Verkettungsbrücke, des Verifikationswertes mit einem Referenzwert, der in einem internen Register (300) der Kopplungs- und Verkettungsbrücke gespeichert ist; und
- Erteilen des Zugriffs im Nur-Lese-Modus auf den Inhalt des Zufallszugriffsspeichers basierend auf dem Vergleich.

9. Elektronisches Verfahren (100) nach Anspruch 8, wobei die Kopplungs- und Verkettungsbrücke (112) konfiguriert ist zum Zurückgeben eines Standardwertes, zum Beispiel einer Kette von Nullen, an den Prozessor (104) ansprechend auf die Lesezugriffsanforderung des Verifikationswertes.

10. Verfahren nach Anspruch 8 oder 9, wobei die erste kryptographische Schaltung (116) konfiguriert ist zum Generieren des Verifikationswertes dank wenigstens einer kryptographischen Operation an jedem empfangenen Datenwert und jeder Speicheradresse, wobei die wenigstens eine kryptographische Operation zusätzlich auf einem geheimen Schlüssel basiert.

11. Verfahren nach Anspruch 10, wobei die wenigstens eine kryptographische Operation Hashing-Operationen und/oder Operationen durch einen kryptographischen Algorithmus des Typs AES - GCM (Advanced Encryption Standard - Galois/Counter Mode) oder AES - CCM (Advanced Encryption Standard - Counter with cipher block chaining message authentication code) sind und die Generation des Verifikationswertes aufweisen.

12. Verfahren nach einem der Ansprüche 8 bis 11, wobei der Prozessor (104) konfiguriert ist zum Übertragen des Referenzwertes an die Kopplungs- und Verkettungsbrücke (112) vor Übertragen der Schreibzugriffsanforderung.

13. Verfahren nach einem der Ansprüche 8 bis 12, ferner konfiguriert zum Löschen des Inhalts des Zufallszugriffsspeichers (120) durch die Kopplungs- und Verkettungsbrücke (112), wenn der Vergleich ergibt, dass der Verifizierungswert nicht mit dem Referenzwert übereinstimmt.

14. Verfahren nach einem der Ansprüche 8 bis 13, ferner aufweisend, vor dem Kopplungsbetrieb, Schreiben des Referenzwertes durch den Prozessor (104) in ein Register (300) der Kopplungs- und Verkettungsbrücke (112).

## Claims

1. A coupling and chaining bridge (112) configured to:
- operate a coupling between a random access memory (120) coupled to the coupling and chaining bridge via a first bus (100) and a cryptographic circuit (116), coupled to the coupling and chaining bridge via a second bus (202), in response to a write access request for data into the random access memory, wherein the write access request comes from a processor (104) coupled to the coupling and chaining bridge via a system bus (110) and a third bus (114), wherein the access request further comprises an address for storing into the random access memory, the coupling operation comprising:
writing the data into the random access memory;
the coupling and chaining circuit being **characterized in that** the coupling operation further comprises: for each piece of data, generating a first write access request into the cryptographic circuit for the piece of data, and generating a second write access request into the cryptographic circuit, for the storage address;
- operate a checking, between the cryptographic circuit and the random access memory in response to a read access request from the processor, of a verification value stored in the cryptographic circuit, the checking operation comprising: the comparison of the verification value with a reference value that is stored in an internal register (300) of the coupling and chaining bridge; and
- based on the comparison, give access to the random access memory in read-only mode.

2. A coupling and chaining bridge (112) according to claim 1, further configured to return a default value in response to the read access request of the verification value from the processor (104).

3. A coupling and chaining bridge (112) according to claim 1 or 2, further configured to delete the content of the random access memory (120) if the comparison determines that the verification value does not match the reference value.

4. A coupling and chaining bridge according to any one of claims 1 to 3, comprising a second register programmable by the processor, which makes it possible to configure the coupling and chaining bridge (112).

5. An electronic device (100) comprising:
- the coupling and chaining bridge (112) according to any one of claims 1 to 5;
- the cryptographic circuit (116) connected to the coupling and chaining bridge via the first bus (200);
- the random access memory (120) connected to the coupling and chaining bridge via the second bus (202); and
- the processor (104) connected to the coupling and chaining bridge via the system bus (110) and the third bus (114).

6. An electronic device (100) according to claim 5, wherein the cryptographic circuit (116) is configured to generate the verification value thanks to at least one cryptographic operation on each data value and storage address and based on a secret key, wherein the secret key is accessible only in read-only mode on the cryptographic circuit.

7. An electronic device (100) according to claim 5 or 6, further comprising a second cryptographic circuit (118) connected to the coupling and chaining bridge (112) and comprising the random access memory (120).

8. A process comprising:
- operating a coupling through a coupling and chaining bridge (112) of an electronic device (100), based on the reception by the coupling and chaining bridge of a write access request from a processor (104) of the device coupled to the coupling and chaining bridge via a system bus (110) and a third bus (114), for data into a random access memory (120) of the device coupled to the coupling and chaining bridge via a first bus (200), wherein each piece of data is associated with a storage address in the random access memory, wherein the coupling operation comprises:
the interception of the write access request by the coupling and chaining bridge;
for each piece of data, generating a first write access request of the piece of data and a second write access request of the associated storage address into a first cryptographic circuit (116) coupled to the coupling and chaining circuit via a second bus (202); and
for each piece of data, its writing into the random access memory;
- operate a checking, by the coupling and chaining bridge based on the reception, by the coupling and chaining bridge, of an read access request by the processor, of a verification value stored in the first cryptographic circuit, the checking operation comprising:
the reading, by the coupling and chaining bridge, of the verification value with a reference value that is stored in an internal register (300) of the coupling and chaining bridge; and
- giving access in read-only mode to the content of the random access memory based on the comparison.

9. An electronic process (100) according to claim 8, wherein the coupling and chaining bridge (112) is configured to return a default value, for example a string of zeroes, to the processor (104) in response to the read access request of the verification value.

10. A process according to claim 8 or 9, wherein the first cryptographic circuit (116) is configured to generate the verification value thanks to at least one cryptographic operation on each received data value and storage address, wherein the at least one cryptographic operation is additionally based on a secret key.

11. A process according to claim 10, wherein the at least one cryptographic operation are hashing operations and/or operations by a cryptographic algorithm of type AES - GCM (Advanced Encryption Standard - Galois/Counter Mode) or AES - CCM (Advanced Encryption Standard - Counter with cipher block chaining message authentication code) comprising the generation of said verification value.

12. A process according to any one of claims 8 to 11, wherein the processor (104) is configured to transmit the reference value to the coupling and chaining bridge (112) before transmitting the write access request.

13. A process according to any one of claims 8 to 12, further configured to delete the content of the random access memory (120) by the coupling and chaining bridge (112) if the comparison determines that the verification value does not match the reference value.

14. A process according to any one of claims 8 to 13, further comprising, before the coupling operation, the processor (104) writing the reference value into a register (300) of the coupling and chaining bridge (112).
